# EUROPÄISCHE PATENTANMELDUNG

(11) **EP 2 474 443 A2**
(43) Veröffentlichungstag der Anmeldung: **11.07.2012**
(21) Anmeldenummer: 12150408.8
(22) Anmeldetag: 06.01.2012
(51) Int. Cl.: B60P 3/22

(54) **Auskleidung für Silobehälter eines Silofahrzeugs und Verfahren zum Einbringen und Positionieren einer Auskleidung**

(30) Priorität: 07.01.2011 DE 102011002487
(71) Anmelder: Huesker Synthetic GmbH, 48712 Gescher (DE)
(72) Erfinder: Noldes, Heinz-Josef, 48691 Vreden (DE); Rolvering, Stefan, 48691 Vreden (DE)
(74) Vertreter: Patentanwälte Freischem

(57) **Zusammenfassung**

Die Erfindung betrifft eine Auskleidung (106) für den Silobehälter (102) eines Silofahrzeugs (100) sowie ein Verfahren zum Kipp-Entladen eines mit einer Auskleidung (106) versehenen Silofahrzeuges (100) mit Silobehälter (102). Ferner betrifft die Erfindung ein Silofahrzeug (100). Der Erfindung liegt die Aufgabe zugrunde, eine Auskleidung (106) für einen Silobehälter (102) eines Silofahrzeugs (100) sowie ein Verfahren zum Kipp-Entladen eines Silobehälters (102) eines Silofahrzeuges (100) sowie ein Silofahrzeug (100) zur Verfügung zu stellen, welche die Gefahr eines Zerreißens der Auskleidung (106) beim Gebrauch verringern und somit den Reinigungsaufwand bei Silofahrzeugen reduzieren. Eine erfindungsgemäße Auskleidung für den Silobehälter (102) eines Silofahrzeugs (100) umfasst:
a) eine flexible Hülle mit einem Querschnitt, welcher dem Querschnitt des Silobehälters (102) angepasst ist,
b) mindestens einen Einfüllstutzen (110) mit einem Querschnitt,
c) mindestens eine Auslassöffnung sowie
d) ein an dem Einfüllstutzen (110) angeordnetes Spannelement zur Fixierung des Einfüllstutzens (110) in der Einfüllöffnung (104) des Silobehälters (102), wobei
e) zumindest ein Teil der Hülle Mittel zur Integration eines Fluidbodens und/oder einen integrierten Fluidboden aufweist.

## Beschreibung

Die Erfindung betrifft eine Auskleidung für den Silobehälter eines Silofahrzeugs sowie ein Verfahren zum Einbringen und Positionieren einer Auskleidung. Ferner betrifft die Erfindung ein Silofahrzeug.

Es ist seit vielen Jahren bekannt, Behälter, die für verschiedene Zwecke genutzt werden, mit Ein- oder Mehrweg-Auskleidungen zu versehen, um eine Verschmutzung des Behälters selbst zu vermeiden oder zu minimieren.

In EP 0 094 600 A1 beispielsweise ist als Auskleidung eine flexible Innenhülle beschrieben, die mit einer speziellen Falttechnik in Transport- und Lagerbehälter eingebracht wird.

In DE 22 46 150 A1 ist ein Verfahren zum Einbringen einer Auskleidung in einen Container beschrieben, bei welchem ein Innendruck aufgebracht wird, um die Auskleidung zu positionieren.

Aus DE 29 719 210 U1 und DE 100 42 301 A1 sind verschiedene Innenauskleidungen für Flüssigkeitstanks bekannt.

In WO 2006/105978 A1 ist ein Verfahren zur dauerhaften Auskleidung von großen Behältern bzw. Tanks beschrieben, bei welchem die Auskleidung aus mehreren miteinander zu verbindenden Bahnen zusammengesetzt wird. Als Verbindungstechnik werden unter anderem Klettverbindungen und Schweißverbindungen vorgeschlagen.

In EP 1 724 214 A1 und EP 2 112 094 A1 sind weitere Auskleidungen, insbesondere für quaderförmige Transportcontainer beschrieben.

Aus FR 2 751 312 A1 ist ein Verfahren zur Positionierung einer Auskleidung für einen Silobehälter eines Transportfahrzeuges bekannt, welcher auf der Oberseite mehrere Einfüllöffnungen und auf der Rückseite eine Entladeöffnung aufweist. Die aus dem Stand der Technik bekannten Auskleidungen haben den Nachteil, dass sie sich nicht oder nur beschränkt als Auskleidungen für Silobehälter von Silofahrzeugen eignen, die mit schüttfähigen, nicht flüssigen Gütern befüllt werden sollen. Wenn die bekannten Silobehälter zum Entladen gekippt werden, besteht die Gefahr, dass eine in dem Silobehälter befindliche Auskleidung zusammen mit in dieser befindlichem Schüttgut verrutscht und die Auskleidung reißt. In diesem Fall wird der Silobehälter verschmutzt und/oder verstopft und muss vor der nächsten Verwendung aufwendig und kostenintensiv gereinigt werden.

Der Erfindung liegt die Aufgabe zugrunde, eine Auskleidung für einen Silobehälter eines Silofahrzeugs sowie ein Verfahren zum Kipp-Entladen eines Silobehälters eines Silofahrzeuges sowie ein Silofahrzeug zur Verfügung zu stellen, welche die Gefahr eines Zerreißens der Auskleidung beim Gebrauch verringern und somit den Reinigungsaufwand bei Silofahrzeugen reduzieren.

Die Lösung der Aufgabe erfolgt erfindungsgemäß mit den Ansprüchen 1, 6 bzw. 9.

Die Aufgabe wird durch ein neues Konzept gelöst. Dieses Konzept umfasst eine spezielle Auskleidung, ein Verfahren zum Kipp-Entladen eines Silobehälters eines Silofahrzeuges und ein spezielles Silofahrzeug. Auf die einzelnen Elemente des Konzepts sowie die Vorteile dieser Elemente wird im Folgenden Bezug genommen.

Eine erfindungsgemäße Auskleidung für den Silobehälter eines Silofahrzeugs umfasst:
a) eine flexible Hülle mit einem Querschnitt, welcher dem Querschnitt des Silobehälters angepasst ist,
b) mindestens einen Einfüllstutzen mit einem Querschnitt,
c) mindestens eine Auslassöffnung sowie
d) ein an dem Einfüllstutzen angeordnetes Spannelement zur Fixierung des Einfüllstutzens in der Einfüllöffnung des Silobehälters, wobei
e) zumindest ein Teil der Hülle Mittel zur Integration eines Fluidbodens und/oder einen integrierten Fluidboden aufweist.

Die flexible Hülle ist vorzugsweise aus antistatischem Material gefertigt. Dadurch wird die Gefahr von Funkenbildung verringert, welche insbesondere bei brennbarer Ladung des Silocontainers zu Explosionen führen könnte. Der Querschnitt des Silobehälters und/oder des Einfüllstutzens bzw. der Einfüllstutzen sind vorzugsweise rund.

Als Materialen für die flexible Hülle eignen sich beispielsweise elastische Materialien, wie z.B. Kautschuk oder textile Produkte, die vorzugsweise gas- und flüssigkeitsdicht sind. Flexible Materialien wie Kautschuk haben den Vorteil, dass das Volumen der Auskleidung für den Gebrauch durch Aufblasen vergrößert werden kann und die Auskleidung nach und vor dem Gebrauch ein nur geringes Volumen aufweist. Dies vereinfacht die Handhabung beim Zusammenlegen und beim Einbau.

Der oder - falls mehrere vorgesehen sind - die Einfüllstutzen der erfindungsgemäßen Auskleidung sind vorzugsweise auf der Oberseite der flexiblen Hülle angeordnet, damit diese von der Innenseite des Silobehälters in den Einfülldom bekannter Silobehälter hineinragen können. Die Auslassöffnung ist meist an einer der beiden Stirnseiten der flexiblen Hülle derart angeordnet, dass diese mit der Auslassöffnung (auch Entladeklappe genannt) des Silobehälters in Deckung gebracht wird. Schüttgut kann in diesem Fall durch die Auslassöffnung der Auskleidung und des Silobehälters aus dem Silobehälter heraus gefördert werden, z.B. durch Kippen des Silobehälters oder durch Druckbeaufschlagung. Die erfindungsgemäße Auskleidung hat gegenüber den aus dem Stand der Technik bekannten Auskleidungen den Vorteil, dass die Auskleidung selbst ein Spannelement umfasst, welches eine schnelle und sichere Fixierung des Einfüllstutzens in der bzw. den Einfüllöffnungen des Silobehälters ermöglicht. Dadurch wird der Einfüllstutzen zum einen sicher in Position gehalten. Ferner wird er zuverlässig gegenüber dem Silobehälter abgedichtet und verhindert ein Eindringen von Schüttgut zwischen der Auskleidung und der Innenseite des Silobehälters.

Das Spannelement kann beispielsweise eine fest mit der Auskleidung verbundene Manschette sein. Eine Manschette kann zum Beispiel ein Ring sein, welcher unter Spannung in die Einfüllöffnung eingesetzt wird und dann durch seine Eigenspannung die Auskleidung im Bereich der Einfüllöffnung einklemmt und somit in Position hält. Die feste Verbindung zwischen der Manschette und der Auskleidung kann beispielsweise durch Vernähen erfolgen. Der Ring ist vorzugsweise aus einem elastischen Material, insbesondere aus Kunststoff, zum Beispiel aus EPDM, hergestellt. Er kann jedoch auch aus Leder oder einem sonstigen Material gefertigt sein, das geeignet ist, den Einfüllstutzen in der Einfüllöffnung des Silobehälters durch Eigenspannung oder durch entsprechende Spannelemente in Position zu halten. Die Manschette kann auch ein Spannelement sein, welches die Auskleidung nicht durch seine Elastizität und Eigenspannung in der Einfüllöffnung des Silobehälters fixiert, sondern durch ein zu betätigendes Spannelement, z.B. durch einen Spannring.

Zumindest ein Teil der Auskleidung weist Mittel zur Integration eines Fluidbodens und/oder einen integrierten Fluidboden auf. Unter Mitteln zur Integration eines Fluidbodens wird beispielsweise eine gas- und luftdichte Durchführung durch die Auskleidung verstanden, die es ermöglicht, von der Außenseite des Silobehälters Luft durch die Wand des Silobehälters und die Auskleidung hindurch zu einem im Bodenbereich des Silobehälters angeordneten Fluidboden zu führen. Dazu kann die Auskleidung beispielsweise im Bodenbereich eine Durchführung aufweisen. Diese Durchführung könnte ein auf der Außenseite der Auskleidung angeordnetes Anschlusselement für eine pneumatische Kupplung an der Innenseite des Silobehälters sowie ein auf der Innenseite der Auskleidung angeordnetes Anschlusselement für eine pneumatische Kupplung an einem in der Auskleidung zu positionierenden Fluidboden aufweisen. Alternativ kann in die Auskleidung selbst ein Fluidboden mit einem Anschluss für eine (Druckluft-) Versorgungsleitung integriert sein. Die Integration oder Ergänzung eines Fluidbodens in eine erfindungsgemäße Auskleidung hat den Vorteil, dass in der Auskleidung befindliches Schüttgut insbesondere vor dessen Entladung fließfähig gemacht werden kann. Dadurch wird verhindert, dass größere Mengen des geladenen Schüttguts gleichzeitig in Richtung der Auslassöffnung rutschen und so die Auskleidung beschädigen könnten.

Vorzugsweise ist an der Auslassöffnung ebenfalls ein Spannelement vorgesehen, um die Auskleidung im Bereich der Auslassöffnung in dem Silobehälter zu fixieren.

In einer weiter bevorzugten Ausführungsform ist an oder nahe des Einfüllstutzens an der Auskleidung ein Halteelement angeordnet, mit welchem der Einfüllstutzen in die Einfüllöffnung des Silobehälters gezogen werden kann. Hierbei kann es sich insbesondere um eine Halteöse, eine Halteschlaufe und/oder ein Seil handeln. Ein solches Halteelement erleichtert die Positionierung und Fixierung der Auskleidung in der Einfüllöffnung.

Die Positionierung des Einfüllstutzens in die Einfüllöffnung des Silobehälters kann weiter erleichtert werden, wenn das Spannelement bzw. die als Spannelement vorgesehene Manschette derart konisch ausgebildet ist, dass der beim Einführen der Auskleidung in die Einfüllöffnung zuerst eintretende Teil einen geringeren Umfang aufweist als der nachfolgende Teil. In diesem Fall nimmt die Spannung und somit die Haltekraft des Spannelements immer weiter zu, je weiter das Spannelement in die Einfüllöffnung eingebracht wird.

Verschmutzungen des Silobehälters können insbesondere beim Entfernen einer erfindungsgemäßen Auskleidung aus dem Silobehälter vermieden werden, wenn das Spannelement ein Verschlusselement zum Verschließen des Einfüllstutzens oder Mittel zum Anbringen eines Verschlusselements aufweist. Mit einem solchen Verschlusselement, das beispielsweise eine flexible Abdeckung sein kann, mit welcher der Einfüllstutzen über einen Klettverschluss geöffnet und verschlossen werden kann, kann wirksam verhindert werden, dass ein nach Entladung eines Schüttgutes aus dem ausgekleideten Silobehälter restliches Schüttgut oder sonstige Verunreinigungen aus der Auskleidung in den Silobehälter gelangen. Dazu wird der Einfüllstutzen vor der Deinstallation der Auskleidung mit dem Verschlusselement verschlossen. Unter Mitteln zum Anbringen eines Verschlusselements werden insbesondere ein Klettverschluss, Druckknöpfe, ein Reißverschluss oder andere Verbindungselemente verstanden, die es ermöglichen, die Auskleidung im Bereich des Einfüllstutzens zu verschließen.

In einer weiter bevorzugten Ausführungsform ist die Auskleidung mindestens auf ihrer Unterseite, die mit dem Boden des Silofahrzeugs in Kontakt kommt, mit einer rutschhemmenden Beschichtung versehen. Alternativ oder in Ergänzung dazu kann der Boden des Silofahrzeugs vor der Installation der Auskleidung mit einer rutschhemmenden Beschichtung versehen werden. Dadurch wird die Reibung zwischen Auskleidung und Silobehälter erhöht, was die Gefahr einer Verschiebung der Auskleidung gegenüber dem Silobehälter verringert.

Die Positionierung der Auskleidung im Silobehälter kann weiter dadurch verbessert werden, dass für die Unterseite der Auskleidung ein Material mit höherem Gewicht verwendet wird als für die übrigen Bereiche der Auskleidung.

Eine zusätzliche Fixierung der Auskleidung im Silobehälter kann dadurch erreicht werden, dass an der Auskleidung, insbesondere an der vorderen Stirnseite, Schlaufen, Ösen oder sonstige Mittel angeordnet sind, die es ermöglichen, die Auskleidung mit Seilen, Karabinerhaken oder sonstigen Befestigungsmitteln in dem Silobehälter zu befestigen.

Die Erfindung betrifft auch ein Verfahren zum Kipp-Entladen eines mit einer Auskleidung versehenen Silofahrzeuges mit Silobehälter, das Mittel zum mittelbaren oder unmittelbaren Erfassen der Füllmenge und/oder des Innendrucks des Silobehälters umfasst, wobei während des Kipp-Entladens die möglichen Kippstellungen des Silobehälters in Abhängigkeit der erfassten Füllmenge und/oder des erfassten Innendrucks vorgegeben werden. Mit diesem Verfahren kann die Sicherheit beim Entladen eines Silofahrzeuges erhöht werden, da durch Vorgabe beschränkter Kippstellungen bei hohem Beladungsniveau bzw. hohem Innendruck wirksam verhindert wird, dass große Mengen des geladenen Schüttguts gleichzeitig in Richtung der Auslassöffnung rutschen. Beispielsweise kann der Druck der Frontpresse eines bekannten Silo-Straßenfahrzeugs elektronisch vermindert werden, wenn ein mit einer Auskleidung versehener Silobehälter vollständig gefüllt ist. Der Füllstand des Silobehälters kann über eine Kraftmessung in der Frontpresse erfolgen. Sobald die vom Silobehälter auf die Frontpresse wirkende Kraft nach einer Teilentladung abnimmt, kann der Druck der Frontpresse wieder erhöht werden.

In einer bevorzugten Ausführungsform des Verfahrens umfasst das Einbringen der Auskleidung des Silobehälters zur Lagerung und/oder zum Transport von Schüttgütern folgende Schritte:
a) Auswahl einer in Form und Größe an den Silobehälter angepassten Auskleidung und Einbringen der Auskleidung in den Silobehälter,
b) Abdichten der Auskleidung gegenüber den Öffnungen im Silobehälter und
c) Positionierung der Auskleidung durch Einströmen eines gasförmigen Mediums in die Auskleidung und Entnahme von zwischen der Wand des Silobehälters und der Auskleidung befindlichen gasförmigen Medien.

Mit der Bezeichnung "Silobehälter" sind im Zusammenhang mit dem erfindungsgemäßen Verfahren insbesondere Silobehälter von Silofahrzeugen gemeint, wobei der Begriff "Silofahrzeug" vorwiegend sowohl Straßenfahrzeuge als auch Schienenfahrzeuge umfasst. Als einfaches und kostengünstiges gasförmiges Medium eignet sich Luft. Je nach Transportgut kann es jedoch auch vorteilhaft sein, andere Medien zu verwenden, beispielsweise, um das Transportgut zu konservieren oder anderweitig positiv zu beeinflussen. Das Abdichten der Auskleidung gegenüber den Öffnungen im Silobehälter kann zum einen über die bereits erwähnten Spannelemente (z.B. Manschetten) erfolgen. Ferner können einzelne Öffnungen, wie z. B. das üblicherweise um die Auslassöffnung angeordnete Mannloch mit Hilfe eines Trichters abgedichtet werden. Dabei wird ein trichterförmig gestaltetes Gebilde derart in das Mannloch eingesetzt, dass er dicht an dessen Rändern anliegt. Zwischen Trichter und der Auslassöffnung des Silobehälters können Dichtelemente, insbesondere ein Dichtring angeordnet sein, um zu verhindern, dass Schüttgut, das den Trichter passiert hat in den Zwischenraum zwischen Trichter und Mannlochdeckel fließt. Beim Befüllen des Silobehälters füllt sich der Trichter mit Schüttgut. Bei weiterer Befüllung drückt das Schüttgut immer stärker nach außen in Richtung der Trichterspitze, wodurch sich die dichtende Wirkung des Trichters verstärkt. Das erfindungsgemäße Verfahren hat den Vorteil, dass die Auskleidung eines Silobehälters bereits vor der Befüllung des Behälters in den Behälter derart "eingepresst" wird, dass zwischen der Auskleidung und der Innenwand des Silobehälters ein luftleerer Raum entsteht, der die Auskleidung in Position hält. Dies erfolgt durch Entnahme der zwischen der Auskleidung und dem Silobehälter befindlichen Luft bzw. sonstiger dazwischen befindlicher Medien. Eine derartige Positionierung und Fixierung der Auskleidung in einem Silobehälter gewährleistet ein hohes Maß an Sicherheit vor Verrutschen der Auskleidung gegenüber dem Silobehälter.

Das erfindungsgemäße Verfahren hat den weiteren Vorteil, dass der Silobehälter beim Befüllen und/oder Entleeren mit Druck beaufschlagt werden kann. Dadurch können Befüll- und/oder Entleerungsvorgänge beschleunigt werden. Ferner kann auf ein Kippen des Silobehälters bei einzelnen Schüttgütern ganz verzichtet oder die Kippbewegung zumindest gegenüber bekannten Silofahrzeugen deutlich beschränkt werden.

Die Erfindung betrifft auch ein Silofahrzeug mit einem Silobehälter, das Mittel zum mittelbaren oder unmittelbaren Erfassen der Füllmenge und/oder des Innendrucks des Silobehälters sowie eine Sperrvorrichtung aufweist, mittels welcher die Neigung des Silobehälters zum Entladen in Abhängigkeit der erfassten Füllmenge und/oder des Innendrucks steuerbar ist. Auf die Vorteile dieser Ausgestaltung wurde bereits im Zusammenhang mit dem analogen erfindungsgemäßen Verfahren verwiesen.

In einer bevorzugten Ausführungsform weist das Silofahrzeug ferner eine durch das Verschlusselement einer Einfüllöffnung für Schüttgut hindurch führende Befüllleitung auf, um eine in dem Silobehälter befindliche Auskleidung mit einem gasförmigen Medium mit Druck beaufschlagen zu können, sowie ein in dem Silobehälter angeordnetes Ventil, welches es zwischen einer in dem Silobehälter angeordneten Auskleidung und dem Silobehälter befindlichen flüssigen oder gasförmigen Medien ermöglicht, nach außen zu entweichen, wenn diese von der Auskleidung gegen die Innenwand des Silobehälters gedrückt werden. Ein Silofahrzeug mit den vorstehend genannten Merkmalen hat gegenüber bekannten Silofahrzeugen den Vorteil, dass sie auf einfache Art und Weise die Durchführung des erfindungsgemäßen Verfahrens zum Auskleiden und Positionieren einer Auskleidung in einem Silobehälter ermöglicht.

Vorzugsweise ist neben der durch die Einfüllöffnung hindurch führenden Befüllleitung eine weitere, von dieser Befüllleitung unabhängige Befüllleitung vorgesehen. In diesem Fall stehen zwei von einander unabhängige Befüllsysteme, insbesondere Luft-Befüllsysteme, zur Verfügung, von denen ein Befüllsystem für "saubere", die Leitungen nicht oder nur unwesentlich verunreinigende Produkte und eines für kritische, d.h. die Leitungen ggf. verschmutzende Produkte, verwendbar ist. Dadurch kann die Zahl der erforderlichen Reinigungen für die Befüllsysteme und den Silobehälter reduziert und somit die Nutzbarkeit, insbesondere die Fahrzeit eines erfindungsgemäßen Silofahrzeugs erhöht werden.

Die Deinstallation einer erfindungsgemäßen Auskleidung aus einem Silofahrzeug sowie die Vorbereitung des Silofahrzeugs für einen neuen Transport mit einer neuen Auskleidung kann besonders schnell erfolgen, wenn an der Auslassöffnung des Silobehälters eine mit dem Silobehälter lösbar verbundene Entladeklappe angeordnet ist. Dies hat den Vorteil, dass Verunreinigungen, die sich im Bereich der Entladeklappe zwangsläufig sammeln, dadurch entfernt werden, dass die gesamte Entladeklappe durch eine bereits gereinigte Entladeklappe ausgetauscht wird. Die lösbare Anordnung der Entladeklappe kann beispielsweise dadurch erfolgen, dass diese über ein Milchgewinde mit dem Silobehälter verschraubt ist. Selbstverständlich sind auch andere Verbindungstechniken möglich, beispielsweise das Verspannen einer Entladeklappe mit einem oder mehreren Spannelementen, elektrisch hydraulisch oder pneumatisch betätigte Befestigungsmechanismen etc.

Wenn an dem erfindungsgemäßen Silofahrzeug eine erste Luftverteilerbatterie und eine zweite, von der ersten Luftverteilerbatterie unabhängige Luftverteilerbatterie vorgesehen ist, kann die Effizienz des Fahrzeugs weiter erhöht werden, weil dann zwei voneinander unabhängige Luftsysteme zur Verfügung stehen. In diesem Fall kann beispielsweise ein Luftsystem für die Verwendung mit "schmutzigen" Produkten und eines für die Verwendung mit "sauberen" Produkten eingesetzt werden. Mit "schmutzigen" Produkten sind solche gemeint, die mit hoher Wahrscheinlichkeit zu Verunreingungen führen, welche vor einer erneuten Verwendung des gleichen Luftsystems mit "sauberen" Produkten durch Reinigung beseitigt werden müssten.

Weitere vorteilhafte Ausführungsformen sind nachfolgend im Zusammenhang mit den Zeichnungen beschrieben. Es zeigen:
Figur 1 ein aus dem Stand der Technik bekanntes Silofahrzeug mit einer darunter vergrößert dargestellten erfindungsgemäßen Auskleidung in einer vereinfachten Darstellung,
Figur 2 eine Ausführungsform eines Silobehälters mit Anbauteilen eines erfindungsgemäßen Silofahrzeugs in einer Ansicht von oben sowie
Figur 3 eine Schnittdarstellung eines Mannlochdeckels des in Figur 2 gezeigten Silobehälters.

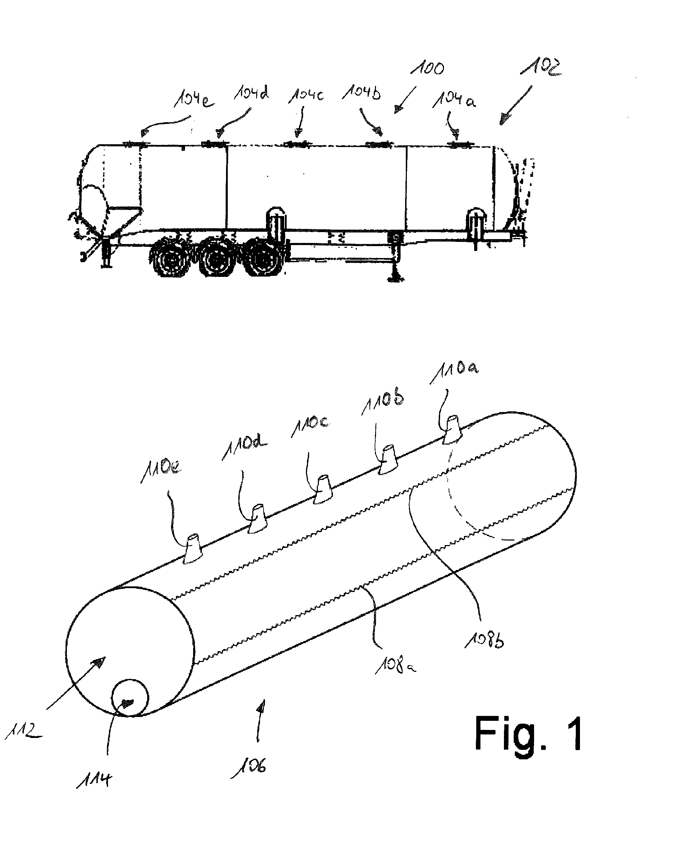

Figur 1 zeigt ein Silofahrzeug 100 mit einem Silobehälter 102 ohne Zugmaschine. Der Silobehälter weist fünf Einfüllöffnungen 104 auf, die auch als Einfülldome bezeichnet werden.

Unterhalb des Silofahrzeugs 100 ist eine erfindungsgemäße Auskleidung 106 in einer vergrößerten, schematischen Darstellung gezeigt, wie sie in einem Silofahrzeug 100 eingesetzt werden kann. Die in Figur 1 dargestellte Auskleidung 106 ist aus mehreren Bahnen von textilen Produkten gefertigt, welche über Nähte 108 miteinander verbunden sind. Die Nähte sind als wellenförmige Linien dargestellt.

Die Auskleidung 106 weist eine im Wesentlichen zylindrische Grundform auf, wobei auf der Oberseite fünf Einfüllstutzen 110 angeordnet sind, die radial aus der Auskleidung herausragen, um im eingesetzten Zustand der Auskleidung von der Innenseite des Silobehälters 102 in die Einfüllöffnungen 104 hineinragen zu können. Auf der rückwärtigen Stirnseite 112 der Auskleidung 106 ist eine Auslassöffnung 114 vorgesehen, deren Durchmesser der an dem in Figur 1 nicht dargestellten Auslassöffnung des Silofahrzeugs (im Bereich des sogenannten Mannlochs) im Wesentlichen entspricht. Im installierten Zustand der Auskleidung 106 liegen die Auslassöffnung des Silofahrzeugs 100 und die Auslassöffnung 114 der Auskleidung übereinander, so dass in der Auskleidung befindliches, zu entladendes Schüttgut durch die Auslassöffnung 114 der Auskleidung 106 und durch die Auslassöffnung des Silofahrzeugs 100 nach außen gefördert werden kann. Dies erfolgt üblicherweise durch Kippen des Silobehälters 102 und/oder durch Erzeugung eines Überdrucks in dem Silobehälter 102. Als Entladedruck kann beispielsweise ein Überdruck von 0,5 bar gewählt werden.

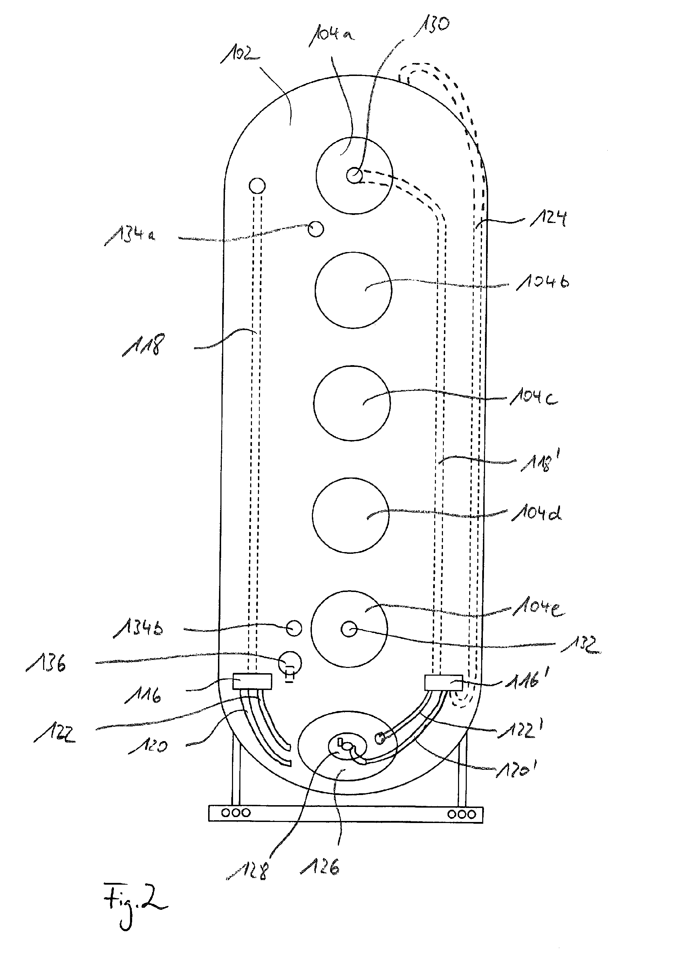

Figur 2 zeigt einen Silobehälter 102 eines erfindungsgemäßen Silofahrzeugs von oben. Der Silobehälter 102 weist - wie das in Figur 1 gezeigte Fahrzeug - fünf Einfüllöffnungen 104 auf, welche über bekannte Verschlusselemente (z.B. Domdeckel) verschließbar sind.

An der linken Außenseite des Silobehälters 102 ist eine aus dem Stand der Technik bekannte erste Luftverteilerbatterie 116 befestigt. Diese weist Anschlüsse für eine nach vorne führende Befüllleitung 118 (auch Oberluftleitung genannt), eine nach hinten führende Treibluftleitung 120 und eine weitere, nach hinten führende Versorgungsleitung 122 für ein in dem Silobehälter 102 befindliches Auflockerungstuch (nicht gezeigt) auf. In Figur 2 sind die Treibluftleitung 120 und die Leitung 122 für das Auflockerungstuch nicht an die entsprechenden Anschlüsse angeschlossen, sondern hängen an nicht dargestellten Halterungen am Silobehälter 102.

An der rechten Außenseite des Silobehälters 102 ist eine zweite Luftverteilerbatterie 116' befestigt. Diese weist - analog zur ersten Luftverteilerbatterie - Anschlüsse für eine zweite nach vorne führende Befüllleitung 118', eine zweite nach hinten führende Treibluftleitung 120' und eine zweite nach hinten führende Versorgungsleitung 122' für das Auflockerungstuch (nicht gezeigt) auf. Zusätzlich weist die zweite Luftverteilerbatterie 116' einen Anschluss für eine nach vorne führende Versorgungsleitung 124 für einen Fluidboden (nicht dargestellt) auf. Die Oberluftleitung 118' führt zu einem im Domdeckel der vordersten Einlassöffnung 104a vorgesehenen Lufteinlass 130. Dieser ermöglicht es, bei installierter Auskleidung Luft oder sonstige Medien in den Silobehälter 102 und in die etwaig darin installierte Auskleidung einzuleiten und somit einen Innendruck aufzubauen.

In Figur 2 ist die Treibluftleitung 122' mit dem am Mannlochdeckel 126 des Silobehälters angeordneten Anschluss verbunden. Die Versorgungsleitung 120' für das Auflockerungstuch ist mit dem entsprechenden Anschluss verbunden, der an der Auslassöffnung 128 des Silobehälters 102 angeordnet ist. Die Auslassöffnung 128 ist ein Bestandteil des Mannlochdeckels 126.

Der in Figur 2 dargestellte Silobehälter 102 weist ferner an dem Verschlusselement der hintersten Einlassöffnung 104e einen Entlüftungshahn 132 auf. Darüber hinaus sind ein vorderes Überdruckventil 134a und ein hinteres Überdruckventil 134b sowie ein Luftauslasshahn 136 in der Wand des Silobehälters 102 vorgesehen.

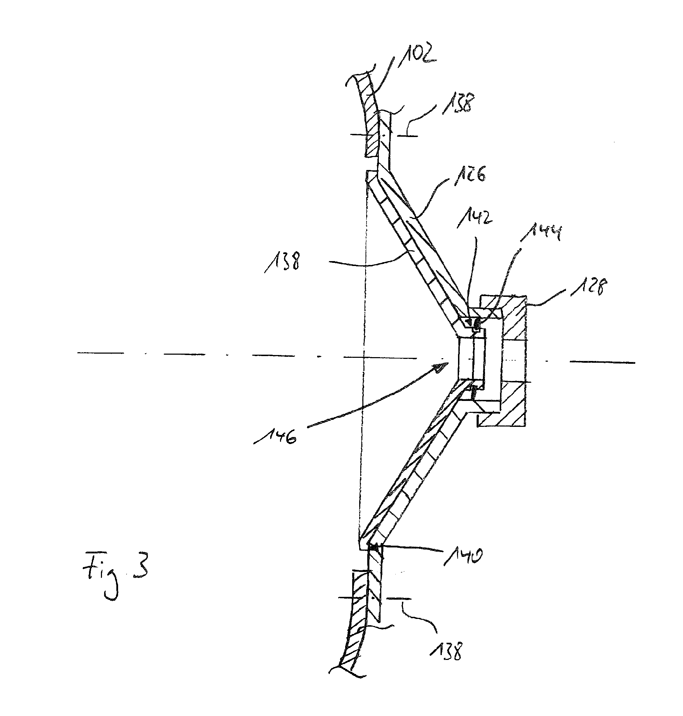

Figur 3 zeigt den Mannlochdeckel 126 des in Figur 2 dargestellten Silobehälters 102. Dieser ist über mehrere, über den Umfang verteilte Schraubverbindungen mit dem Gehäuse des Silobehälters 102 verbunden. Zwei der Schraubverbindungen sind in Figur 2 durch Strichpunktlinien angedeutet. Anders als bei herkömmlichen Silofahrzeugen ist die nur schematisch dargestellte Entladeklappe 128 über ein Schnellverbindungssystem mit dem restlichen Teil des Mannlochdeckels 126 verbunden. Unter einem Schnellverbindungssystem werden insbesondere ein Milchgewinde zwischen Entladeklappe 128 und Mannlochdeckel oder ein Bajonettverschluss mit verstanden, die es ermöglichen, innerhalb kurzer Zeit die Entladeklappe 128 auszutauschen. Dies hat insbesondere im Zusammenhang mit dem erfindungsgemäßen Silofahrzeug folgende Vorteile.

Wie in Figur 3 gezeigt, kann in das Mannloch von innen ein Trichter 138 eingesetzt werden. Der Trichter 138 soll verhindern, dass bei eingesetzter Auskleidung Schüttgut von innen den Mannlochdeckel 126 verschmutzt. Dazu weist der gezeigte Trichter im Bereich seines größten Umfangs einen Kragen 140 auf, um sich von innen - wie gezeigt - an dem Mannlochdeckel 126 oder der Wand des Silobehälters 102 abzustützen. Wenn der Silobehälter 102 mit einer Auskleidung versehen ist, ist die Auskleidung zwischen Trichter 138 und Mannlochdeckel 126 eingeklemmt (in Figur 3 nicht dargestellt) und verhindert so, dass Schüttgut mit dem Trichter oder der im Bereich des Trichters befindlichen Silobehälterwand in Kontakt kommt. Darüber hinaus weist der Trichter 138 im Bereich seines geringsten Umfangs auf der Außenseite eine umlaufende Nut 142 für die Aufnahme eines Dichtungselements 144 auf. Damit wird verhindert, dass Schüttgut, welches durch die Öffnung 146 des Trichters in Richtung Entladeklappe geströmt ist, wieder in den Zwischenraum zwischen Trichter 138 und Mannlochdeckel 126 zurückfließt und so den Mannlochdeckel verschmutzen könnte. Der Einsatz des in Figur 3 gezeigten Trichters 138 kann somit verhindern, dass bei Einsatz einer erfindungsgemäßen Auskleidung 106 der Mannlochdeckel durch Schüttgut verschmutzt wird. Verschmutzungen entstehen bei der in Figur 3 gezeigten Anordnung lediglich auf der Innenseite der Entladeklappe. Um einen schnellen Neueinsatz eines Silofahrzeuges für neues Schüttgut ohne zusätzliche Reinigung zu ermöglichen, kann die in ihren Abmessungen eher kleine Entladeklappe einfach durch eine andere, im Fahrzeug mitgeführte (und noch saubere) Entladeklappe ausgetauscht werden.

Zum allgemeinen Verständnis wird nachfolgend beschrieben, wie die Verwendung einer erfindungsgemäßen Auskleidung in einem erfindungsgemäßen Silofahrzeug ablaufen kann. Die im Folgenden aufgelisteten Verwendungsschritte sind nicht alle obligatorisch. Das Beispiel stellt lediglich eine mögliche Verwendung der erfindungsgemäßen Auskleidung dar.

Vorteilhaft ist es, wenn vor dem Einbringen der Auskleidung der Silobehälter gereinigt ist, um eine Schädigung der Auskleidung durch Schüttgut einer vorangegangnen Ladung zu vermeiden. Zur Installation der Auskleidung wird diese in einem zusammengerollten oder zusammengefalteten Zustand durch die Mannlochöffnung in den Silobehälter eingebracht. Im Silobehälter wird die Auskleidung dann entfaltet bzw. ausgerollt, so dass die jeweiligen Einfüllstutzen unter den zugehörigen Einfülldomen des Silofahrzeugs liegen. Die Einfüllstutzen werden dann mit Hilfe von Seilen oder Stangen von den Domen aus nach oben gezogen, bis die Manschetten oder sonstigen Dichtelemente fest in den Einfülldom eingespannt sind. Sofern die Spannelemente nicht aufgrund ihrer Eigenspannung dichten, kann es erforderlich sein, manuell Spannelemente in den Einfülldomen zu betätigen, um diese zu verspannen und die Auskleidung im Bereich der Einfülldome gegenüber dem Silobehälter abzudichten und in diesem zu fixieren.

Über optionale Befestigungsschlaufen kann die Auskleidung an der Stirnseite des Silobehälters vorfixiert werden. Die die Auskleidung installierende Person verlässt anschließend wieder über das Mannloch den Silobehälter, legt in den Mannlochdeckel den Trichter ein, der in Figur 3 im Detail gezeigt ist, und verschraubt den Mannlochdeckel mit dem Silobehälter.

Um die Auskleidung abschließend zu positionieren und zu fixieren, wird die Aufkleidung über die Leitung 118' unter Druck gesetzt, was dazu führt, dass diese an die Innenwände des Silobehälters gepresst wird. Über die Ventile 134a, 134b kann zwischen der Auskleidung und dem Silobehälter befindliche Luft entweichen, so dass die Auskleidung sich eng an die Innenwand des Silobehälters anlegt. Optional kann dieser Effekt dadurch verbessert werden, dass Luft über die Ventile 134a, 134b aktiv aus dem Zwischenraum zwischen Auskleidung und Silobehälter abgesaugt wird. So entsteht ein luftleerer Raum zwischen Auskleidung und Silobehälter, welcher die Auskleidung in ihrer Form stabilisiert. Selbst wenn der Überdruck innerhalb der Auskleidung abgelassen wird, fällt die Auskleidung nicht zusammen, weil sie im Bereich ihrer Öffnungen dicht gegen die Öffnungen des Behälters anliegt und keine Luft zwischen die Auskleidung und die Wand des Silobehälters einströmen kann.

Der Silobehälter mit der in Form und Position gebrachten Auskleidung kann anschließend in bekannter Art und Weise über die Einfülldome 104 befüllt und über die Auslassöffnung entladen werden.

### Bezugszeichenliste

- 100: Silofahrzeug
- 102: Silobehälter
- 104: Einfüllöffnungen
- 106: Auskleidung
- 108: Nähte
- 110: Einfüllstutzen
- 112: rückwärtige Stirnseite der Auskleidung
- 114: Auslassöffnung der Auskleidung
- 116: Luftverteilerbatterien
- 118: Oberluftleitung
- 120: Treibluftleitung
- 122: Versorgungsleitung für Auflockerungstuch
- 124: Versorgungsleitung für Fluidboden
- 126: Mannlochdeckel
- 128: Auslassöffnung des Silobehälters / Entladeklappe
- 130: Lufteinlass in Verschlusselement der Einlassöffnung
- 132: Entlüftungshahn
- 134: Überdruckventil
- 136: Luftauslasshahn
- 138: Trichter
- 140: Kragen
- 142: Nut
- 144: Dichtelement
- 146: Öffnung des Trichters

## Patentansprüche

1. Auskleidung für den Silobehälter (102) eines Silofahrzeugs (100) zur Verwendung mit Schüttgütern umfassend
a) eine flexible Hülle mit einem Querschnitt, welcher dem Querschnitt des Silobehälters (100) angepasst ist,
b) mindestens einen Einfüllstutzen (110) mit einem Querschnitt,
c) mindestens eine Auslassöffnung (114) sowie
d) ein an dem einen oder jedem Einfüllstutzen (110) angeordnetes Spannelement zur Fixierung des Einfüllstutzens (110) in der Einfüllöffnung (104) des Silobehälters (102),
**dadurch gekennzeichnet, dass**
e) zumindest ein Teil der Hülle Mittel zur Integration eines Fluidbodens und/oder einen integrierten Fluidboden aufweist.

2. Auskleidung nach Anspruch 1, **dadurch gekennzeichnet, dass** das Spannelement eine fest mit der Hülle verbundene Manschette ist.

3. Auskleidung nach einem oder mehreren der vorangehenden Ansprüche, **dadurch gekennzeichnet, dass** an oder nahe des Einfüllstutzens (110) ein Halteelement angeordnet ist, mit welchem der Einfüllstutzen (110) in die Einfüllöffnung (104) des Silobehälters (102) ziehbar ist.

4. Auskleidung nach Anspruch 3, **dadurch gekennzeichnet, dass** das Halteelement mindestens eines der folgenden Merkmale aufweist:
a) eine Halteöse oder Halteschlaufe
b) ein Seil.

5. Auskleidung nach einem oder mehreren der vorstehenden Ansprüche, **dadurch gekennzeichnet, dass** das Spannelement ein Verschlusselement zum Verschließen des Einfüllstutzens (110) oder Mittel zum Anbringen eines Verschlusselements aufweist.

6. Verfahren zum Kipp-Entladen eines mit einer Auskleidung (106) versehenen Silofahrzeuges (100) mit Silobehälter (102), das Mittel zum mittelbaren oder unmittelbaren Erfassen der Füllmenge und/oder des Innendrucks des Silobehälters (102) umfasst, wobei während des Kipp-Entladens die möglichen Kippstellungen des Silobehälters (102) in Abhängigkeit der erfassten Füllmenge und/oder des erfassten Innendrucks vorgegeben werden.

7. Verfahren nach Anspruch 6, **dadurch gekennzeichnet, dass** das Einbringen der Auskleidung (106) des Silobehälters (102) zur Lagerung und/oder zum Transport von Schüttgütern folgende Schritte umfasst:
a) Auswahl einer in Form und Größe an den Silobehälter (102) angepassten Auskleidung (106) und Einbringen der Auskleidung (106) in den Silobehälter (102),
b) Abdichten der Auskleidung (106) gegenüber den Öffnungen im Silobehälter (102) und
c) Positionierung der Auskleidung (106) durch Einströmen eines gasförmigen Mediums in die Auskleidung und Entnahme von zwischen der Wand des Silobehälters (102) und der Auskleidung (106) befindlichen gasförmigen und/oder flüssigen Medien.

8. Verfahren nach Anspruch 6 oder 7, **dadurch gekennzeichnet, dass** der Silobehälter (102) beim Befüllen und/oder Entleeren mit Druck beaufschlagt wird.

9. Silofahrzeug mit einem Silobehälter (102), **dadurch gekennzeichnet, dass** Mittel zum mittelbaren oder unmittelbaren Erfassen der Füllmenge und/oder des Innendrucks des Silobehälters (102) vorgesehen sind und eine Sperrvorrichtung, mittels welcher die Neigung des Silobehälters (102) zum Entladen in Abhängigkeit der erfassten Füllmenge und/oder des Innendrucks steuerbar ist.

10. Silofahrzeug nach Anspruch 9, **dadurch gekennzeichnet, dass** das Silofahrzeug (100) eine durch das Verschlusselement einer Einfüllöffnung (104) für Schüttgut hindurch führende Befüllleitung für gasförmige Medien aufweist, um eine in dem Silobehälter (102) befindliche Auskleidung (106) mit einem gasförmigen Medium mit Druck beaufschlagen zu können, und ferner in dem Silobehälter (102) mindestens ein Ventil vorgesehen ist, welches es zwischen einer in dem Silobehälter (102) angeordneten Auskleidung und dem Silobehälter (102) befindlichen flüssigen oder gasförmigen Medien ermöglicht, nach außen zu entweichen, wenn diese von der Auskleidung (106) gegen die Innenwand des Silobehälters (102) gedrückt werden.

11. Silofahrzeug nach Anspruch 9 oder 10, **dadurch gekennzeichnet, dass** an der Auslassöffnung des Silobehälters (128) eine mit dem Silobehälter (102) lösbar verbundene Entladeklappe (128) angeordnet ist.

12. Silofahrzeug nach einem der Ansprüche 9 bis 11, **dadurch gekennzeichnet, dass** eine erste Luftverteilerbatterie (116) und eine zweite, von der ersten Luftverteilerbatterie (116) unabhängige Luftverteilerbatterie (116) vorgesehen ist.
